# EUROPEAN PATENT APPLICATION

(11) **EP 4 174 673 A1**
(43) Date of publication of application: **03.05.2023**
(21) Application number: 21205204.7
(22) Date of filing: 28.10.2021
(51) Int. Cl.: G06F 16/00

(54) **COMPUTER-IMPLEMENTED METHOD AND REGISTRY-ASSIGN-SYSTEM FOR IDENTIFYING PHYSICAL OBJECTS WITHIN A DISTRIBUTED IT-SYSTEM-STRUCTURE**

(71) Applicant: Siemens Aktiengesellschaft, 80333 München (DE)
(72) Inventor: Daniel, Donny Thomas, 82008 Unterhaching (DE); Weiss, Johannes, 96170 Lisberg (DE)
(74) Representative: Siemens Patent Attorneys

(57) **Abstract**

In order to enable a physical object identification without existing domain identifiers, additional external identifiers or artificial identifiers assigned to the physical object for identifying it, it is proposed for identifying a physical object (POBx) within a distributed IT-system-structure (DITSYS⁺ , DITSYS⁺⁺) including two IT-systems (ITSY1, ITSY2) or at least three IT-systems (ITSY1, ITSY2, ITSY3) communicating with each other and managing each concerning the physical object IT-system related data sets (DS_{POBx,1}, DS_{POBx,2}; DS_{POBx,3}) including each at least one data set attribute (DSA1_{POBx,1}, ... DSA3_{POBx,3}) to use a registry-assign-system (RGASS) (**i**) interacting with the IT-systems via registry adapters (RGA) and resolve adapters (RSA) assigned to each IT-system, (**ii**) at which the physical object is registered (rgt) via the registry adapter by each IT-system with regard to the IT-system related data sets according to first data set attributes (DSA1_{POBx,1}, DSA1_{POBx,2}, DSA1_{POBx,3}) and (**iii**) in which a mapping (MPG) or assignment (ASG) is executed (exe) with respect to an object-kind and to the first data set attributes such that, when the IT-system to identify the physical object queries (qry) via the resolve adapter with respect to the first data set attributes a data set attribute of interest managed IT-system based within the IT-system-structure in the context of the data sets and which is different from the first data set attributes and is an alien or unknown to each querying IT-system, the queried data set attribute of interest of the physical object is identified due to the mapping or assignment and is provided from a target IT-system, at which the queried data set attribute is available and which due to the identification is notified (ntf) by the registry-assign-system, to the querying IT-system.

## Description

The invention refers to a computer-implemented method for identifying physical objects within a distributed IT-system-structure according to the preamble claim 1 and a registry-assign-system for identifying physical objects within a distributed IT-system-structure structure according to the preamble claim 7.

A distributed IT-system structure comprises in the context of the present invention a collection of loosely coupled single IT-systems interconnected by a communications network. Such a distributed IT-system structure is for example realized as a multi-site-system-structure or one-site-system-structure.

The most common distributed system is a one-site-system-structure. A single site system avoids many of the operational and organizational problems of distribution because it is run just like a centralized system. However a one-site-system differs from the classical system, because of consisting of many loosely-coupled systems rather than one centralized system.

A multi-site-system-structure including multi-site-systems enable an organization as an accumulation of persons, such as natural or legal ones, to integrate for instance all clients and companies, called as "sites", of the organization in an "Enterprise Resource Planning <ERP>"-system, where all clients and companies have access to data and information of respective locations within the multi-site-system-structure.

An IT-system or an information technology system in the context of this invention is an electronic data processing system consisting of hardware components, software components, network components, an operating system and a data storage, all of which are used to provide IT-services and -solutions including optional peripheral devices.

This includes for example - computers, mainframes, server systems, database systems, information systems, process computers, digital measuring systems, DSP systems, microcontroller systems, compact controllers, embedded systems, cell phones, handhelds, digital answering machines, video conference systems and various communication systems - among others.

The IT-system is maintaining its data sets with internal identifiers or internal IDs, called as technical identifiers, in order to be able to address the IT-system. The technical identifiers or internal IDs are unique for an IT-system.

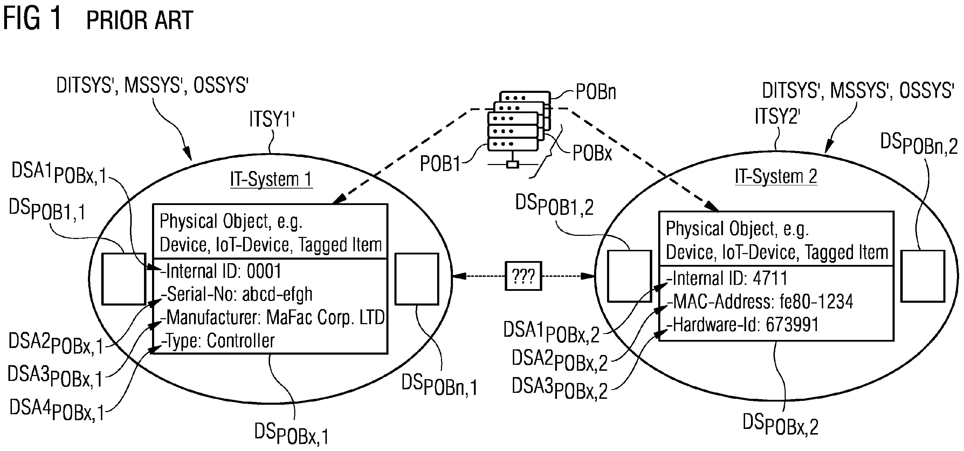

FIGURE 1 shows - as state of art - a first distributed IT-system-structure DITSYS', which can be realized preferably either as a first multi-site-system-structure MSSYS' or a first one-site-system-structure OSSYS' including two IT-systems ITSY1', ITSY2' communicating with each other. In these IT-systems ITSY1', ITSY2' concerning physical objects POB1,... POBx, ...POBn, which could be for example each either a device, a IoT-device *(cf. IoT = Internet on Things)* or a tagged item, IT-system related data sets are available. So in a first IT-system ITSY1' concerning the physical objects POB1,... POBx, ...POBn first IT-system related data sets DS_{POB1,1}, ... DS_{POBx,1}, ... DS_{POBn,1} are available, wherein in a second IT-system ITSY2' concerning the physical objects POB1,... POBx, ...POBn second IT-system related data sets DS_{POB1,2}, ... DS_{POBx,2}, ... DS_{POBn,2} are available.

In order to identify - as an example - a special physical object POBx of the physical objects POB1,... POBx, ...POBn the first IT-system (IT-system 1) ITSY1' manages, e.g. creates, uses and/or provides, a first data set DS_{POBx,1} including at least one primary data set attribute DSA1_{POBx,1}, DSA2_{POBx,1}, DSA3_{POBx,1}, DSA4_{POBx,1}. So the first data set DS_{POBX,1} identifying the physical object POBx includes a first primary data set attribute DSA1_{POBx,1} being an internal ID of the object with the value "0001", a second primary data set attribute DSA2_{POBx,1} being a serial number of the object with the value "abcd-efgh", a third primary data set attribute DSA3_{POBx,1} being a manufacturer of the object with the name "MaFac Corp. Ltd." and a fourth primary data set attribute DSA4_{POBx,1} being a type of the object with the string "controller".

To identify - also as an example - the special physical object POBx of the physical objects POB1,... POBx, ...POBn the second IT-system (IT-system 2) ITSY2' manages, e.g. creates, uses and/or provides, a second data set DS_{POBx,2} including at least one secondary data set attribute DSA1_{POBx,2}, DSA2_{POBx,2}, DSA3_{POBx,2}. So the second data set DS_{POBx,2} also identifying the physical object POBx includes a first secondary data set attribute DSA1_{POBx,2} being an internal ID of the object with the value "4711", a second secondary data set attribute DSA2_{POBx,2} being a MAC-address of the object with the value "fe80-1234" and a third secondary data set attribute DSA3_{POBx,2} being a hardware ID of the object with the value "673991".

In the case that the two IT-systems ITSY1', ITSY2' are handling aspects of the same physical object, here the physical object POBx, each IT-system is managing, e.g. creating, using and/or providing, its own internal ID (technical identifier) for the corresponding data set that is representing the physical object POBx.

If now these two IT-systems ITSY1', ITSY2' need to interact on the same physical object POBx, they cannot find out which data set of the IT-system 1 ITSY1' corresponds to data set of IT-system 2 ITSY2' in the absence of a "domain identifier".

A domain identifier is an identification approach that is publicly accepted and applied to the physical object to identify it.

For example, this can be, when the physical object is a book, an ISBN-number for books or when the physical object is a car, a VIN (Vehicle Identification Number) for cars.

But unfortunately, not every physical object of the real world has a standardized identification approach. So for example a building or a factory line.

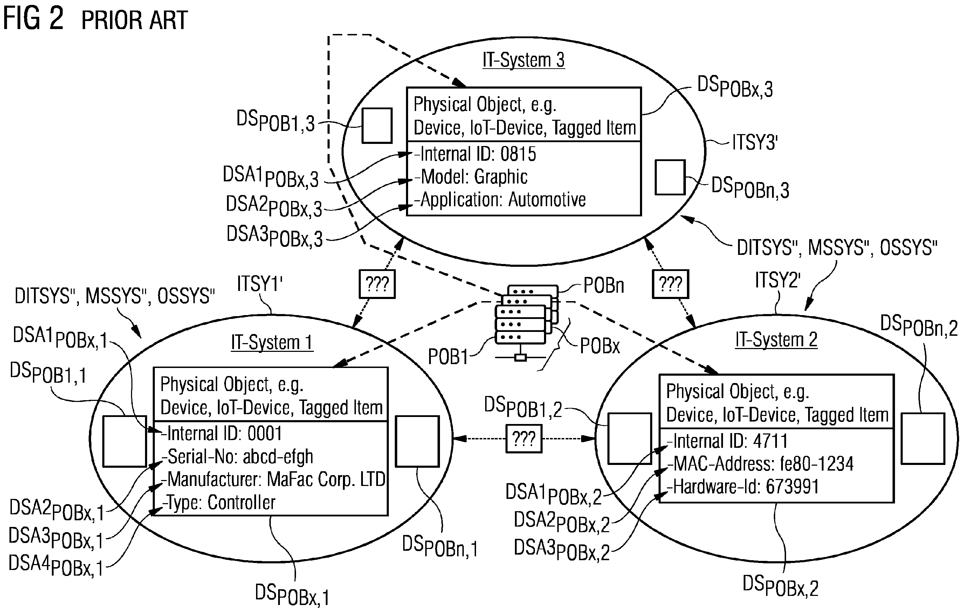

FIGURE 2 shows - as further state of art - a second distributed IT-system-structure DITSYS", which can be realized preferably either as a second multi-site-system-structure MSSYS" or a second one-site-system-structure OSSYS" including three IT-systems ITSY1', ITSY2', ITSY3' communicating with each other. In these IT-systems ITSY1', ITSY2', ITSY3' concerning physical objects POB1,... POBx, ...POBn, which could be for example each either a device, a IoT-device *(cf. IoT = Internet on Things)* or a tagged item, IT-system related data sets are available. So in a first IT-system ITSY1' concerning the physical objects POB1,... POBx, ...POBn first IT-system related data sets DS_{POB1,1}, ... DS_{POBx,1}, ... DS_{POBn,1} are available, wherein in a second IT-system ITSY2' concerning the physical objects POB1,... POBx, ...POBn second IT-system related data sets DS_{POB1,2}, ... DS_{POBx,2}, ... DS_{POBn,2} and in a third IT-system ITSY3' concerning the physical objects POB1,... POBx, ...POBn third IT-system related data sets DS_{POB1,3}, ... DS_{POBx,3}, ... DS_{POBn,3} are available.

In order to identify - again as an example - a special physical object POBx of the physical objects POB1,... POBx, ...POBn the first IT-system (IT-system 1) ITSY1' manages, e.g. creates, uses and/or provides, a first data set DS_{POBx,1} including at least one primary data set attribute DSA1_{POBx,1}, DSA2_{POBx,1}, DSA3_{POBx,1}, DSA4_{POBx,1}. So the first data set DS_{POBx,1} identifying the physical object POBx includes a first primary data set attribute DSA1_{POBx,1} being an internal ID of the object with the value "0001", a second primary data set attribute DSA2_{POBx,1} being a serial number of the object with the value "abcd-efgh", a third primary data set attribute DSA3_{POBx,1} being a manufacturer of the object with the name "MaFac Corp. Ltd." and a fourth primary data set attribute DSA4_{POBx,1} being a type of the object with the string "controller".

To identify - also as an example - the special physical object POBx of the physical objects POB1,... POBx, ...POBn the second IT-system (IT-system 2) ITSY2' manages, e.g. creates, uses and/or provides, a second data set DS_{POBx,2} including at least one secondary data set attribute DSA1_{POBx,2}, DSA2_{POBx,2}, DSA3_{POBx,2}. So the second data set DS_{POBx,2} also identifying the physical object POBx includes a first secondary data set attribute DSA1_{POBx,2} being an internal ID of the object with the value "4711", a second secondary data set attribute DSA2_{POBx,2} being a MAC-address of the object with the value "fe80-1234" and a third secondary data set attribute DSA3_{POBx,2} being a hardware ID of the object with the value "673991".

To identify - also as an example - the special physical object POBx of the physical objects POB1,... POBx, ...POBn the third IT-system (IT-system 3) ITSY3' manages, e.g. creates, uses and/or provides, a third data set DS_{POBx,3} including at least one tertiary data set attribute DSA1_{POBx,3}, DSA2_{POBx,3}, DSA3_{POBx,3}. So the third data set DS_{POBx,3} also identifying the physical object POBx includes a first tertiary data set attribute DSA1_{POBx,3} being an internal ID of the object with the value "0815", a second tertiary data set attribute DSA2_{POBx,3} being a model of the object with the string "graphic" and a third tertiary data set attribute DSA3_{POBx,3} being an application of the object with the string "automotive".

Once again the note: The domain identifier is the identification approach that is publicly accepted and applied to the physical object to identify it.

For example, this can be, when the physical object is a book, an ISBN-number for books or when the physical object is a car, a VIN (Vehicle Identification Number) for cars.

But unfortunately, not every physical object of the real world has a standardized identification approach. So for example a building or a factory line.

Example case referring to the FIGURE 1 (the same example could be referred to FIGURE 2):
- There is the physical object POBx, which is e.g. a device.
- The IT-system 1 ITSY1' is managing, e.g. creating, using and/or providing, a data set for this device under the data set attribute internal ID or technical identifier with the value "0001" and is managing, e.g. creating, using and/or providing, the other data set attributes "serial number", "manufacturer" and "type".
- The IT-system 2 ITSY2' is managing, e.g. creating, using and/or providing, a data set for this device under the data set attribute internal ID or technical identifier with the value "4711" and is managing, e.g. creating, using and/or providing, the other data set attributes "MAC-address" and "hardware ID".
- When the IT-system 2 ITSY2' wants to request the "serial number" of the data set from the IT-system 1 ITSY1' for further processing e.g. checking if a firmware update would be required.

In this example the IT-system 2 ITSY2' cannot retrieve the information from the IT-system 1 ITSY1' as the IT-system 2 ITSY2' doesn't know under which internal ID or technical identifier the requested "serial number" of the data set for the device is stored.

This situation is indicated in the FIGURES 1 and 2 due to the rectangular box with the three question marks "???" in the cited FIGURES.

With reference to the FIGURE 1 (the same reference could be made according to FIGURE 2) today's solutions demands to change either IT-system 1 ITSY1' or IT-system 2 ITSY2' to make each the other IT-system 2 ITSY2' respectively IT-system 1 ITSY1' known.

For example IT-system 2 ITSY2' can track an additional data set attribute "external identifier" at the data set attribute internal ID or technical identifier "4711" in which the internal ID or the technical identifier with the value "0001" from the IT-system 1 ITSY1' can be added. The drawbacks of this solution are that IT-systems get tightly bound to each other, that bringing more IT-systems into account (e.g. a third IT-system 3; cf. FIGURE 2) makes it more and more complex and that someone needs to manage those external identifier relationships well.

Another today's approach is to create an artificial identifier which is managed instead of the internal ID or the technical identifier. This artificial identifier then needs to be used equally for all involved IT-systems. Some customers are using the inventory ID for this. The IT-systems need to allow to use another identification scheme in order to support this customization. Once this identification scheme changes, data consistency is endangered.

There are other approaches like ontological modelling with knowledge graphs to take all data instances into account at one central place. This is a heavy-weight approach and costs a lot of time to get it realized and it is required to also spend a lot of time to keep this database managed.

It is an objective of the invention to propose a computer-implemented method and a registry-assign-system for identifying physical objects within a distributed system structure, in which the object identification is enabled without domain identifiers, additional external identifiers or artificial identifiers assigned to the physical objects for identifying them exist.

This objective is solved with regard to a computer-implemented method defined in the preamble of claim 1 by the features in the characterizing part of claim 1.

The objective is further solved with regard to a computer-implemented-tool by claim 6.

Moreover the objective is solved with regard to a registry-assign-system defined in the preamble of claim 7 by the features in the characterizing part of claim 7.

The main idea of the invention according to the claims 1, 6 and 7 in order to identify a physical object of physical objects within a distributed IT-system-structure including two IT-systems or at least three IT-systems communicating with each other and managing, in particular creating, using and/or providing, each concerning the physical objects IT-system related data sets including each at least one data set attribute is to use a registry-assign-system (**i**) interacting with the IT-systems via registry adapters and resolve adapters assigned to each IT-system, (**ii**) at which the physical object is registered via the registry adapter by each IT-system with regard to the IT-system related data sets according to first data set attributes and (**iii**) in which a mapping or assignment is executed with respect to an object-kind and to the first data set attributes such that, when the IT-system to identify the physical object queries via the resolve adapter at the registry-assign-system with respect to the first data set attributes a data set attribute of interest managed IT-system based, in particular created, used and/or provided, within the distributed IT-system-structure in the context of the data sets and which on one side is different from the first data set attributes and on the other is an alien or unknown to each querying IT-system, the queried data set attribute of interest of the physical object is identified due to the mapping or assignment and is provided from a target IT-system of the IT-systems, at which the queried data set attribute is available and which due to the identification is notified by the registry-assign-system, to the querying IT-system.

This is a lightweight approach compared to those mentioned in the introductory part above.

The proposed solution takes the following features (technical components) into account to solve the problem of object identification within a distributed IT-system-structure with multiple IT-systems. The features are:
- a registry-assign-system
- a registry adapter
- a resolve adapter
- a semantic understanding of a kind (attribute) of the object to be identified, e.g. physical, device, IoT-device, tagged item.

The registry-assign-system only exists one time, while the registry adapter and the resolve adapter exists per IT-system that they are connected via conventional, well-known communication technology, e.g. a wireless- or wired-based such as Ethernet respectively WIFI.

The registry-assign-system is maintaining the existing objects, e.g. physical, devices, IoT-devices, tagged items, from the connected IT-systems and a potential mapping or assignment between the objects. To maintain the existing objects only an origin IT-system and an internal identifier (ID) of the object needs to be stored. The mapping between objects can be done at any time either manually (cf. claims 2 and 8), by a software-algorithm (cf. claims 3 and 9) or by a matching algorithm for at least three IT-systems need to be involved (cf. claims 4 and 10).

The mapping or assigning approaches are outlined further below separately.

The registry adapter takes care to feed the available instances of objects of a concrete IT-system to the registry-assign-system. This can be done either one time, regularly, e.g. daily, weekly, or on-demand, e.g. whenever data changes in an originating IT-system, which is normally that IT-system contacting the registry-assign-system also called as source IT-system, depending on the capabilities of the IT-system to connect to, which is a target IT-system. The registry adapter will register an object at the registry-assign-system with the internal identifier (ID) and the source IT-system.

The resolve adapter translates the internal identifier (ID) of the source IT-system to the internal identifier (ID) of the target IT-system. The resolve adapter can be used in between a call of IT-systems to transparently replace the identifier. Then the existing IT-systems doesn't need to be changed in order to make them interoperable. The resolve adapter is able to cache the responses from the registry-assign-system for a while to improve performance. The resolve adapter is only required for outgoing calls to other IT-systems and not for incoming calls.

According to the semantic understanding of a kind (attribute) of the object the definition of the "kind" is a way to denote into which "category" the registered internal identifiers (ID) of the object belong to. Because the IT-system can manage different kinds, e.g. physical, device, IoT-device, tagged item, and there could be different kinds having the same identification (internal ID).

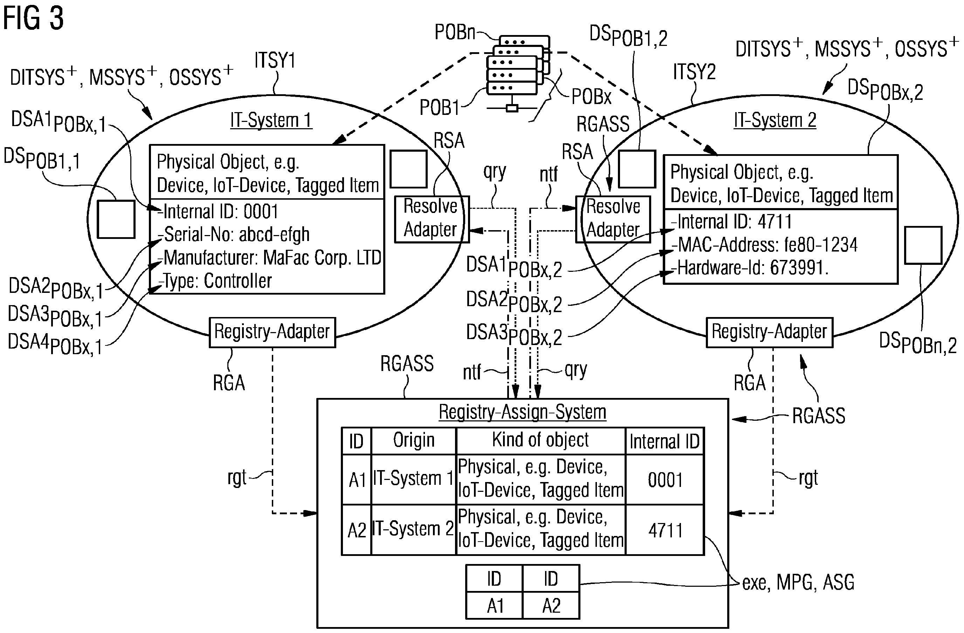

For example according to Figure 3 it is outlined how the different technical components could work together principally.
- The registry adapter of the IT-system 1 registers the physical object, e.g. the device, the IoT-device, tagged item, with internal ID "0001" at the registry-assign-system with an upstream ID "A1".
- The registry adapter of IT-system 2 registers the physical object, e.g. the device, the IoT-device, tagged item, with internal ID "4711" at the registry-assign-system with an upstream ID "A2".
- There is done for example a manual mapping between the physical object with the internal ID "0001" from IT-system 1 and the physical object with the internal ID "4711" from IT-system 2. The mapping is "A1" with "A2". There are also other mapping possibilities outlined below.
- IT-system 2 wants to call IT-system 1 to get the Manufacturer, which is "MaFac Corp. LTD." of the physical object with the internal ID "4711". IT-system 1 doesn't know such a physical object with the internal ID "4711".
- The resolve adapter is able to translate the physical object with the internal ID "4711" from the IT-system 2 to the physical object with the internal ID "0001" from the IT-system 1 on resolving it via the registry-assign-system.
- The registry-assign-system checks which upstream ID is used for the physical object with the internal ID "4711" from the IT-system 2, it is "A2". Then the registry-assign-system checks if there is a mapping to a physical object from the IT-system 1. The result due to the mapping is "yes" namely it is "A1". Then the registry-assign-system responds with the internal ID "0001" of the physical object from the IT-system 1.
- The call towards the IT-system 1 can now be answered.

The possibilities for the mapping or assigning are:
- Manual: A manual mapping means that a user creates the relations of upstream IDs manually. This can be supported by a user interface, e.g. a graphical user interface, which displays unmapped objects from IT-systems connected to the registry-assign-system with regard to data sets with their data set attributes. These data set attributes would be loaded by the graphical user on demand from the connected IT-systems so that data does not need to be duplicated within the registry-assign-system.
- Software-Algorithm: The registry-assign-system via the registry adapter can be enhanced by a business logic to calculate the mapping or assignment. The business logic can then read data set attributes of the originating or target IT-system and is able to compare it with its logic to create the mapping or assignment.

For example: It is possible that the registry-assign-system via the registry adapter for the IT-system 2 is interpreting for instance a Hardware Id attribute "673991" using a software-algorithm to calculate a queried (originating) serial number "abcd-efgh" of a target IT-system. With this information the internal ID "0001" of the physical object from the IT-system 1 can be determined and the upstream ID's mapped in the registry-assign-system.

There can be a lot of different variants to implement such software-algorithms, and this is strongly related to the involved systems.
- Matching Algorithm: A matching is possible if there are more than two IT-systems involved, two mappings between the IT-systems already exist and a third relation needs to be involved.

For example: The at least three IT-systems are called IT-system 1, IT-system 2 and IT-system 3 having a data set D1, D2 and D3. There exists already a mapping between data set from IT-system 1 and IT-system 3 as well as IT-system 2 and IT-system 3. Then the mapping or assignment is D1=D3 and D2=D3. In this case the relation between IT-system 1 and IT-system 2 can be easily created as D1=D2=D3.

By proposed solution the following advantages can be leveraged:
- With the approach encompassing the registry-assign-system, the registry adapter and the resolve adapter any existing IT-system of the distributed IT-system-structure can be taken into account without the need to change the original IT-system in its intentional structure. Changes or extensions are realized by the cited adapters.
- The approach is extensible. So any IT-system can be connected or equipped with the adapters.
- There is no limitation about how many systems can be connected to the registry-assign-system.
- The mapping of objects only needs to be done one time. By default mappings or assignments need to be done manually. It is possible to automate the mapping using software-algorithms.
- The more IT-systems are connected to the registry-assign-system which needs to deal with the same kind of object and the corresponding data, the easier the mapping or assignment is (cf. matching algorithm approach)

Compared to the existing state of the art approaches the following disadvantages will not appear:
- Make an existing system able to deal with an "external identifier". By using an "external identifier" also a manual mapping is required.
- Limitation to support only as much as "external identifiers" as implemented in the IT-system
- No additional artificial identifiers required that needs to be handled by participating IT-systems.

Moreover, advantageous further developments of the invention arise out of the following description of a preferred embodiment of the invention and based on the FIGURES 1 and 2 showing each the stet of the art according to FIGURES 3 to 5. They show:
FIGURE 3 a registry-assign-system based identification of physical objects within a distributed IT-system-structure with two IT-systems,

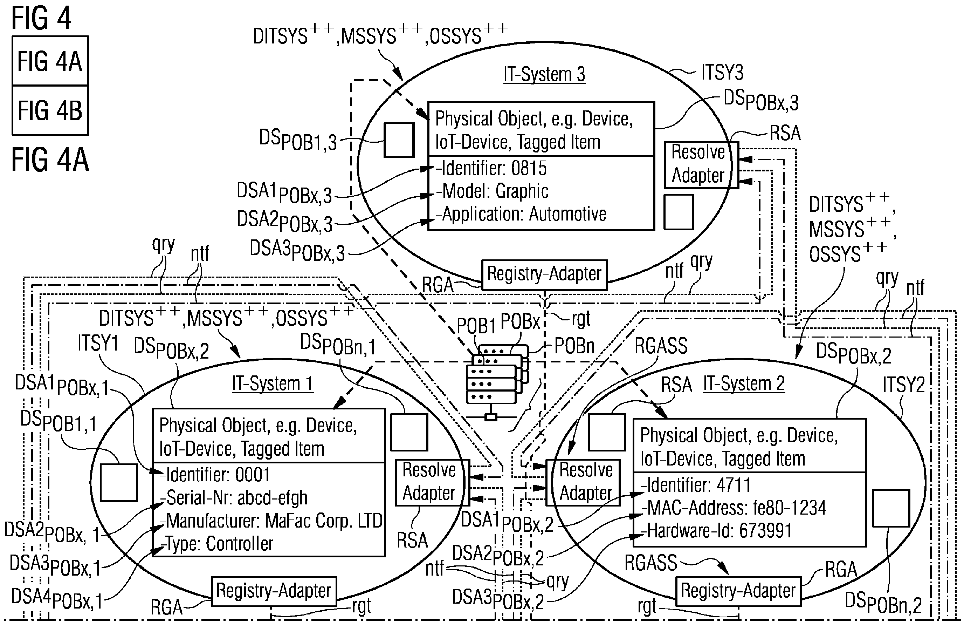

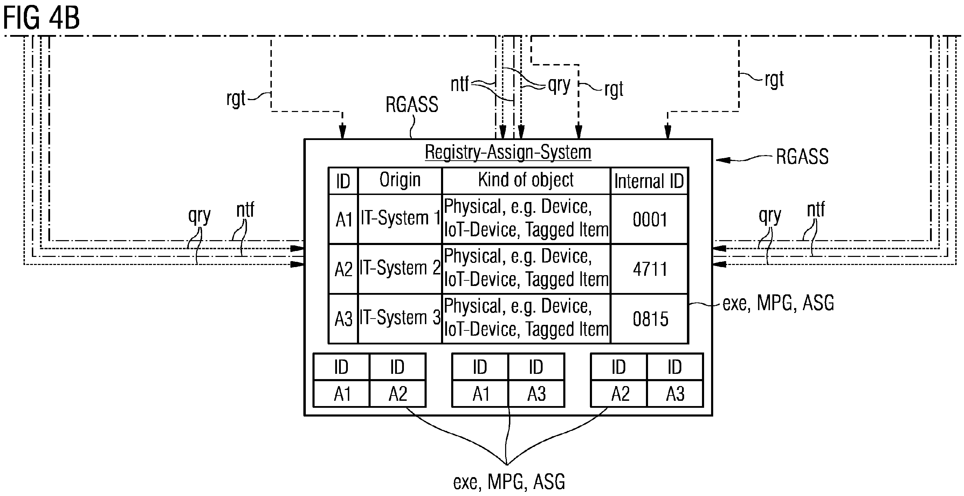

FIGURE 4 in modification of the scenario in the FIGURE 3 a registry-assign-system based identification of physical objects within a distributed IT-system-structure with three IT-systems,

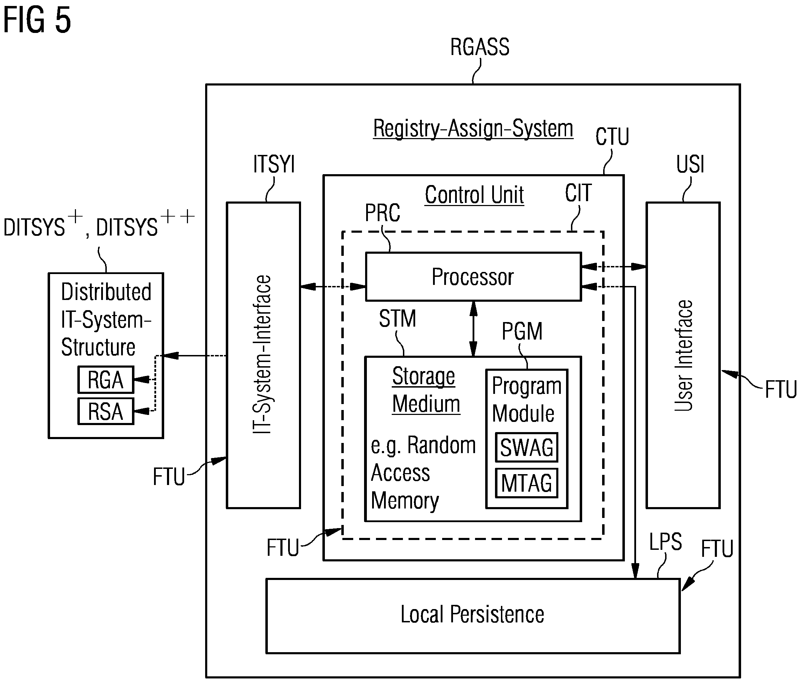

FIGURE 5 a principle design of the registry-assign-system interacting for the registry-assign-system based product identification with the distributed IT-system-structure according to the FIGURES 3 and 4.

FIGURE 3 shows based on the scenario depicted in the FIGURE 1 a registry-assign-system based identification of physical objects within a distributed IT-system-structure with two IT-systems. Consequently it is depicted a first modified distributed IT-system-structure DITSYS⁺, which can be realized preferably either as a first modified multi-site-system-structure MSSYS⁺ or a first modified one-site-system-structure OSSYS⁺ including two modified IT-systems ITSY1, ITSY2 communicating with each other. In these IT-systems ITSY1, ITSY2 concerning physical objects POB1,... POBx, ...POBn, which could be for example each either a device, a IoT-device *(cf. IoT = Internet on Things)* or a tagged item, IT-system related data sets are available. So in a first modified IT-system ITSY1 concerning the physical objects POB1,... POBx, ...POBn first IT-system related data sets DS_{POB1,1}, ... DS_{POBx,1}, ... DS_{POBn,1} are available, wherein in a second modified IT-system ITSY2 concerning the physical objects POB1,... POBx, ...POBn second IT-system related data sets DS_{POB1,2}, ... DS_{POBx,2}, ... DS_{POBn,2} are available.

Also here in order to identify - as an example - a special physical object POBx of the physical objects POB1,... POBx, ...POBn the first modified IT-system (IT-system 1) ITSY1 manages, e.g. creates, uses and/or provides, a first data set DS_{POBx,1} including at least one primary data set attribute DSA1_{POBx,1}, DSA2_{POBx,1}, DSA3_{POBx,1}, DSA4_{POBx,1}. So the first data set DS_{POBx,1} identifying the physical object POBx includes a first primary data set attribute DSA1_{POBx,1} being an internal ID of the object with the value "0001", a second primary data set attribute DSA2_{POBx,1} being a serial number of the object with the value "abcd-efgh", a third primary data set attribute DSA3_{POBx,1} being a manufacturer of the object with the name "MaFac Corp. Ltd." and a fourth primary data set attribute DSA4_{POBx,1} being a type of the object with the string "controller".

Also again to identify - also as an example - the special physical object POBx of the physical objects POB1,... POBx, ...POBn the second modified IT-system (IT-system 2) ITSY2 manages, e.g. creates, uses and/or provides, a second data set DS_{POBx,2} including at least one secondary data set attribute DSA1_{POBx,2}, DSA2_{POBx,2}, DSA3_{POBx,2}. So the second data set DS_{POBx,2} also identifying the physical object POBx includes a first secondary data set attribute DSA1_{POBx,2} being an internal ID of the object with the value "4711", a second secondary data set attribute DSA2_{POBx,2} being a MAC-address of the object with the value "fe80-1234" and a third secondary data set attribute DSA3_{POBx,2} being a hardware ID of the object with the value "673991".

In the case that also the two modified IT-systems ITSY1, ITSY2 are handling aspects of the same physical object, here the physical object POBx, each IT-system is managing, e.g. creating, using and/or providing, its own internal ID (technical identifier) for the corresponding data set that is representing the physical object POBx.

If now these two modified IT-systems ITSY1, ITSY2 need to interact on the same physical object POBx, they cannot find out which data set of the IT-system 1 ITSY1 corresponds to data set of IT-system 2 ITSY2 in the absence of a domain identifier, an additional external identifier or an artificial identifier.

For the interaction on the same physical object POBx the two modified IT-systems ITSY1, ITSY2 include each a registry adapter RGA and a resolve adapter RSA, which form each a communication interface to a registry-assign-system RGASS. The registry-assign-system RGASS is connected via conventional, well-known communication technology, e.g. a wireless- or wired-based Internet access, with the two modified IT-systems ITSY1, ITSY2.

FIGURE 5 shows a principle design of the registry-assign-system RGASS interacting for the registry-assign-system based product identification with the first modified distributed IT-system-structure DITSYS⁺ according to the FIGURE 3 and later on (with respect to the description of FIGURE 4) with a second modified distributed IT-system-structure DITSYS⁺⁺ according to the FIGURE 4.

According to this design the registry-assign-system RGASS includes a control unit CTU, a user interface USI, a local persistence LPS and an IT-system interface ITSYI. The control unit CTU is thereby connected to the user interface USI, a local persistence LPS and the IT-system interface ITSYI. Via the IT-system interface ITSYI the registry-assign-system RGASS is connected with the registry adapter RGA and the resolve adapter RSA of the two IT-systems ITSY1, ITSY2 and later on (with respect to the description of FIGURE 4) additionally with a third IT-system ITSY3.

Furthermore a computer-implemented-tool CIT is implemented into the control unit CTU or uploadable to the control unit CTU. The computer-implemented-tool CIT includes (i) a non-transitory, processor-readable storage medium STM having processor-readable program-instructions of a program module PGM for identifying the physical object POBx stored in the non-transitory, processor-readable storage medium STM and (**ii**) a processor PRC connected with the storage medium STM executing the processor-readable program-instructions of the program module PGM to identify the physical object POBx. For identifying the physical object POBx the computer-implemented-tool CIT of the control unit CTU, the user interface USI, the local persistence LPS and the IT-system interface ITSYI form a functional unit FTU.

According to the FIGURE 3 via the registry adapter RGA the first IT-system ITSY1 registers rgt the physical object POBx with regard to the first data set DS_{POBx,1} including the first to fourth primary data set attribute DSA1_{POBx,1}, DSA2_{POBx,1}, DSA3_{POBx,1}, DSA4_{POBx,1} according to the first primary data set attribute DSA1_{POBx,1} identifying the physical object POBx at the registry-assign-system RGASS, where the registering-related information are stored in the local persistence LPS.

And also via the registry adapter RGA the second IT-system ITSY2 registers rgt the physical object POBx with regard to the second data set DS_{POBx,2} including the first to third secondary data set attribute DSA1_{POBx,2}, DSA2_{POBx,2}, DSA3_{POBx,2} according to the first secondary data set attribute DSA1_{POBx,2} identifying the physical object POBx at the registry-assign-system RGASS. Also these registering-related information are stored in the local persistence LPS.

Due to the physical object registration with regard to the first and second data sets DS_{POBx,1}, DS_{POBx,2} the registry-assign-system RGASS with the computer-implemented-tool CIT of the control unit CTU is enabled to execute exe a mapping MPG or an assignment ASG with respect to a kind of object, which is physical, but it could also be a device, an IoT-device or a tagged item. Furthermore the mapping MPG or assignment ASG takes place with respect to the first primary and the first secondary data set attributes DSA1_{POBx,1}, DSA1_{POBx,2}, which are the values "0001" and "4711" of the corresponding internal IDs of the physical object POBx managed by the two IT-systems ITSY1, ITSY2.

Due to the execution of the mapping MPG or an assignment ASG an overall IT-system-independent identification of the physical object POBx is possible without the need of the domain identifier, the additional external identifier, the artificial identifier or any necessary measures.

So when now for example and according to the FIGURE 3 the second IT-system ITSY2 in order to identify the physical object POBx queries qry via the resolve adapter RSA and the IT-system interface ITSYI at the control unit CTU with the computer-implemented-tool CIT according to its first secondary data set attribute DSA1_{POBx,2}, which is the internal ID with the value "4711", a data set attribute of interest, which could be for instance the second primary data set attribute DSA2_{POBx,1}, given by the serial number of the object with the value "abcd-efgh", which is managed IT-system based, in particular created, used and/or provided, within the distributed IT-system-structure DITSYS⁺ by the first IT-system ITSY1 in the context of the first data set DS_{POBx,1}. The data set attribute of interest on one side is different from the first primary and first secondary data set attributes DSA1_{POBx,1}, DSA1_{POBx,2}, which are the internal IDs with the values "0001" and "4711", and on the other is an alien or unknown to the querying IT-system ITSY2.

The query is transmitted via the resolve adapter RSA of the second IT-system ITSY2 to the registry-assign-system RGASS, where the query reach the control unit CTU with the computer-implemented-tool CIT via the IT-system interface ITSYI.

Due to the queried data set attribute of interest concerning the physical object POBx transmitted with first secondary data set attribute DSA1_{POBx,2} respectively the internal ID with the value "4711", the control unit CTU with the computer-implemented-tool CIT of the registry-assign-system RGASS is able to identify due to the mapping MPG or assignment ASG a target IT-system of the two IT-systems ITSY1, ITSY2 at which the queried data set attribute is available. In the depicted example it is and can only be the first IT-system ITSY1.

Due to the identification based on the mapping MPG or assignment ASG the first IT-system ITSY1 as the target IT-system is notified ntf by the control unit CTU with the computer-implemented-tool CIT via the first IT-system ITSY1 of the registry-assign-system RGASS about the query, so that it can transfer the queried data set attribute of interest respectively the serial number of the object with the value "abcd-efgh" to the second IT-system ITSY2, which is the querying IT-system, due to the notification. This transfer is not depicted in the FIGURE 3, because it well-known how to realize such a data transfer.

It should be mentioned at this point that it is also possible according to the FIGURE 3 - as a further example - that vice versa the first IT-system ITSY1 in order to identify the physical object POBx queries qry according to its first primary data set attribute DSA1_{POBx,1}, which is the internal ID with the value "0001", a data set attribute of interest, which could be for instance the third secondary data set attribute DSA3_{POBx,2}, given by the hardware ID of the object with the value "673991", which is managed, in particular created, used and/or provided, within the distributed IT-system-structure DITSYS⁺ by the second IT-system ITSY2 in the context of the second data set DS_{POBx,2}.

FIGURE 4 shows based on the scenario depicted in the FIGURE 2 and in modification of the scenario in the FIGURE 3 a registry-assign-system based identification of physical objects within a distributed IT-system-structure with three IT-systems. Consequently it is depicted a second modified distributed IT-system-structure DITSYS⁺⁺, which can be realized preferably either as a second modified multi-site-system-structure MSSYS⁺⁺ or a second modified one-site-system-structure OSSYS⁺⁺ including three modified IT-systems ITSY1, ITSY2, ITSY3 communicating with each other. In these IT-systems ITSY1, ITSY2, ITSY3 concerning physical objects POB1,... POBx, ...POBn, which could be for example each either a device, a IoT-device *(cf. IoT = Internet on Things)* or a tagged item, IT-system related data sets are available. So in a first modified IT-system ITSY1 concerning the physical objects POB1,... POBx, ...POBn first IT-system related data sets DS_{POB1,1}, ... DS_{POBx,1}, ... DS_{POBn,1} are available, wherein in a second modified IT-system ITSY2 concerning the physical objects POB1,... POBx, ...POBn second IT-system related data sets DS_{POB1,2}, ... DS_{POBx,2}, ... DS_{POBn,2} and in a third IT-system ITSY3 concerning the physical objects POB1,... POBx, ...POBn third IT-system related data sets DS_{POB1,3}, ... DS_{POBx,3}, ... DS_{POBn,3} are available.

Also here in order to identify - as an example - a special physical object POBx of the physical objects POB1,... POBx, ...POBn the first modified IT-system (IT-system 1) ITSY1 manages, e.g. creates, uses and/or provides, a first data set DS_{POBx,1} including at least one primary data set attribute DSA1_{POBx,1}, DSA2_{POBx,1}, DSA3_{POBx,1}, DSA4_{POBx,1}. So the first data set DS_{POBx,1} identifying the physical object POBx includes a first primary data set attribute DSA1_{POBx,1} being an internal ID of the object with the value "0001", a second primary data set attribute DSA2_{POBx,1} being a serial number of the object with the value "abcd-efgh", a third primary data set attribute DSA3_{POBx,1} being a manufacturer of the object with the name "MaFac Corp. Ltd." and a fourth primary data set attribute DSA4_{POBx,1} being a type of the object with the string "controller".

Also again to identify - also as an example - the special physical object POBx of the physical objects POB1,... POBx, ...POBn the second modified IT-system (IT-system 2) ITSY2 manages, e.g. creates, uses and/or provides, a second data set DS_{POBx,2} including at least one secondary data set attribute DSA1_{POBx,2}, DSA2_{POBx,2}, DSA3_{POBx,2}. So the second data set DS_{POBx,2} also identifying the physical object POBx includes a first secondary data set attribute DSA1_{POBx,2} being an internal ID of the object with the value "4711", a second secondary data set attribute DSA2_{POBx,2} being a MAC-address of the object with the value "fe80-1234" and a third secondary data set attribute DSA3_{POBx,2} being a hardware ID of the object with the value "673991".

Further again to identify - also as an example - the special physical object POBx of the physical objects POB1,... POBx, ...POBn the third modified IT-system (IT-system 3) ITSY3 manages, e.g. creates, uses and/or provides, a third data set DS_{POBx,3} including at least one tertiary data set attribute DSA1_{POBx,3}, DSA2_{POBx,3}, DSA3_{POBx,3}. So the third data set DS_{POBx,3} also identifying the physical object POBx includes a first tertiary data set attribute DSA1_{POBx,3} being an internal ID of the object with the value "0815", a second tertiary data set attribute DSA2_{POBx,3} being a model of the object with the string "graphic" and a third tertiary data set attribute DSA3_{POBx,3} being an application of the object with the string "automotive".

In the case that the three modified IT-systems ITSY1, ITSY2, ITSY3 are handling aspects of the same physical object, here the physical object POBx, each IT-system is managing, e.g. creating, using and/or providing, its own internal ID (technical identifier) for the corresponding data set that is representing the physical object POBx.

If now these the three modified IT-systems ITSY1, ITSY2, ITSY3 need to interact on the same physical object POBx, they cannot find out which data set of the IT-system 1 ITSY1 corresponds to data set of IT-system 2 ITSY2, which data set of the IT-system 1 ITSY1 corresponds to data set of IT-system 3 ITSY3 and which data set of the IT-system 2 ITSY2 corresponds to data set of IT-system 3 ITSY3 in the absence of a domain identifier, an additional external identifier or an artificial identifier.

For the interaction on the same physical object POBx the three modified IT-systems ITSY1, ITSY2, ITSY3 include each a registry adapter RGA and a resolve adapter RSA, which form each a communication interface to a registry-assign-system RGASS. The registry-assign-system RGASS is connected via conventional, well-known communication technology, e.g. a wireless- or wired-based Internet access, with the two modified IT-systems ITSY1, ITSY2, ITSY3.

At this point it is referred to the description of the FIGURE 5 above, where the design of the registry-assign-system RGASS is described.

Via the registry adapter RGA the first IT-system ITSY1 registers rgt the physical object POBx with regard to the first data set DS_{POBx,1} including the first to fourth primary data set attribute DSA1_{POBx,1}, DSA2_{POBx,1}, DSA3_{POBx,1}, DSA4_{POBx,1} according to the first primary data set attribute DSA1_{POBx,1} identifying the physical object POBx at the registry-assign-system RGASS, where the registering-related information are stored in the local persistence LPS.

And also via the registry adapter RGA the second IT-system ITSY2 registers rgt the physical object POBx with regard to the second data set DS_{POBx,2} including the first to third secondary data set attribute DSA1_{POBx,2}, DSA2_{POBx,2}, DSA3_{POBx,2} according to the first secondary data set attribute DSA1_{POBx,2} identifying the physical object POBx at the registry-assign-system RGASS. Also these registering-related information are stored in the local persistence LPS.

Further also via the registry adapter RGA the third IT-system ITSY3 registers rgt the physical object POBx with regard to the third data set DS_{POBx,3} including the first to third tertiary data set attribute DSA1_{POBx,3}, DSA2_{POBx,3}, DSA3_{POBx,3} according to the first tertiary data set attribute DSA1_{POBx,3} identifying the physical object POBx at the registry-assign-system RGASS. Also these registering-related information are stored in the local persistence LPS.

Due to the physical object registration with regard to the first, second and third data sets DS_{POBx,1}, DS_{POBx,2}, DS_{POBx,2} the registry-assign-system RGASS with the computer-implemented-tool CIT of the control unit CTU is enabled to execute exe a mapping MPG or an assignment ASG with respect to a kind of object, which is physical, but it could also be a device, an IoT-device or a tagged item. Furthermore the mapping MPG or assignment ASG takes place with respect to the first primary, the first secondary and the first tertiary data set attributes DSA1_{POBx,1}, DSA1_{POBx,2}, DSA1_{POBx,3}, which are the values "0001", "4711" and "0815" of the corresponding internal IDs of the physical object POBx managed by the three IT-systems ITSY1, ITSY2, ITSY3.

Due to the execution of the mapping MPG or an assignment ASG an overall IT-system-independent identification of the physical object POBx is possible without the need of the domain identifier, the additional external identifier, the artificial identifier or any necessary measures.

So when now for example and according to the FIGURE 4 the second IT-system ITSY2 in order to identify the physical object POBx queries qry via the resolve adapter RSA and the IT-system interface ITSYI at the control unit CTU with the computer-implemented-tool CIT according to its first secondary data set attribute DSA1_{POBx,2}, which is the internal ID with the value "4711", a data set attribute of interest, which could be for instance the third primary data set attribute DSA3_{POBx,1}, given by the manufacturer of the object with the name "MaFac Corp. LTD.", which is managed IT-system based, in particular created, used and/or provided, within the distributed IT-system-structure DITSYS⁺⁺ by the first IT-system ITSY1 in the context of the first data set DS_{POBx,1}. The data set attribute of interest on one side is different from the first primary, first secondary and first tertiary data set attributes DSA1_{POBx,1}, DSA1_{POBx,2}, DSA1_{POBx,3}, which are the internal IDs with the values "0001", "4711" and "0815", and on the other is an alien or unknown to the querying IT-system ITSY2.

The query is transmitted via the resolve adapter RSA of the second IT-system ITSY2 to the registry-assign-system RGASS, where the query reach the control unit CTU with the computer-implemented-tool CIT via the IT-system interface ITSYI.

Due to the queried data set attribute of interest concerning the physical object POBx transmitted with first secondary data set attribute DSA1_{POBx,2} respectively the internal ID with the value "4711", the control unit CTU with the computer-implemented-tool CIT of the registry-assign-system RGASS is able to identify due to the mapping MPG or assignment ASG a target IT-system of the three IT-systems ITSY1, ITSY2, ITSY3 at which the queried data set attribute is available. In the depicted example it is and can be the first IT-system ITSY1 or the third IT-system ITSY3.

Due to the identification based on the mapping MPG or assignment ASG the first IT-system ITSY1 as the target IT-system is notified ntf by the control unit CTU with the computer-implemented-tool CIT via the first IT-system ITSY1 of the registry-assign-system RGASS about the query, so that it can transfer the queried data set attribute of interest respectively the manufacturer of the object with the name "MaFac Corp. LTD." to the second IT-system ITSY2, which is the querying IT-system, due to the notification. This transfer is not depicted in the FIGURE 4, because it well-known how to realize such a data transfer.

It should be mentioned at this point that it is also possible according to the FIGURE 4 - as a further example - that vice versa the first IT-system ITSY1 in order to identify the physical object POBx queries qry according to its first primary data set attribute DSA1_{POBx,1}, which is the internal ID with the value "0001", a data set attribute of interest, which could be for instance the second secondary data set attribute DSA2_{POBx,2}, given by the MAC-address of the object with the value "fe80-1234", which is managed, in particular created, used and/or provided, within the distributed IT-system-structure DITSYS⁺⁺ by the second IT-system ITSY2 in the context of the second data set DS_{POBx,2}.

Furthermore it is also possible according to the FIGURE 4 - as an additional example - that - in the same manner as between the first and second IT-systems ITSY1, ITSY2 above - the third IT-system ITSY3 in order to identify the physical object POBx queries qry according to its first tertiary data set attribute DSA1_{POBx,3}, which is the internal ID with the value "0815", a data set attribute of interest, which could be for instance the fourth primary data set attribute DSA4_{POBx,1}, given by the type of the object with the string "controller", which is managed, in particular created, used and/or provided, within the distributed IT-system-structure DITSYS⁺⁺ by the first IT-system ITSY1 in the context of the first data set DS_{POBx,2}. Also here a vice versa case with reversed roles between the third and first IT-systems ITSY3, ITSY1 as described above is possible.

Moreover it is also possible according to the FIGURE 4 - as an further additional example - that - in the same manner as between the first and second IT-systems ITSY1, ITSY2 above - the second IT-system ITSY2 in order to identify the physical object POBx queries qry according to its first secondary data set attribute DSA1_{POBx,2}, which is the internal ID with the value "4711", a data set attribute of interest, which could be for instance the second tertiary data set attribute DSA2_{POBx,3}, given by the model of the object with the string "controller", which is managed, in particular created, used and/or provided, within the distributed IT-system-structure DITSYS⁺⁺ by the third IT-system ITSY3 in the context of the third data set DS_{POBx,3}. Also here a vice versa case with reversed roles between the second and third IT-systems ITSY2, ITSY3 as described above is possible.

With regard to the mapping MPG or an assignment ASG the control unit CTU with the computer-implemented-tool CIT, executing the mapping MPG or an assignment ASG finally, forms with the user interface USI, the local persistence LPS and the IT-system interface ITSYI the functional unit FTU for identifying the physical object POBx.

In order to identify the physical object POBx due to the execution of the mapping MPG or an assignment ASG the formed functional unit FTU is designed such that, in the case that the physical object POBx is registered rgt in pairs of systems by
(**i**) the first and second IT-systems ITSY1, ITSY2 with regard to the corresponding first and second IT-systems-related data sets including the data sets attributes stored in the local persistence LPS or
(**ii**) the first and third IT-systems ITSY1, ITSY3 with regard to the corresponding first and second IT-systems-related data sets including the data sets attributes stored in the local persistence LPS or
(**iii**) the second and third IT-systems ITSY2, ITSY) with regard to the corresponding second and third IT-systems-related data sets including the data sets attributes stored in the local persistence LPS,
the mapping MPG or assignment ASG is executed exe preferably manually by inputting corresponding user-triggered mapping or assigning commands via the user interface USI and the control unit CTU into the processor PRC of the Computer-implemented-tool CIT.

Alternatively it also possible the formed functional unit FTU is designed such that, in the case that the physical object POBx is registered rgt in pairs of systems by
(**i**) the first and second IT-systems ITSY1, ITSY2 with regard to the corresponding first and second IT-systems-related data sets including the data sets attributes stored in the local persistence LPS or
(**ii**) the first and third IT-systems ITSY1, ITSY3 with regard to the corresponding first and second IT-systems-related data sets including the data sets attributes stored in the local persistence LPS or
(**iii**) the second and third IT-systems ITSY2, ITSY) with regard to the corresponding second and third IT-systems-related data sets including the data sets attributes stored in the local persistence LPS,
the mapping MPG or assignment ASG can be executed exe algorithm-based, in which a software algorithm SWAG of the program module PGM executed by the processor PRC of the computer-implemented-tool CIT in the control unit CTU and being enhanced by business logic to calculate the mapping MPG or assignment ASG is executed exe such that the business logic enables the processor PRC to read the stored data sets attributes of the IT-systems ITSY1, ITSY2; ITSY1, ITSY3; ITSY2, ITSY3 and to compare them based on the business logic to execute exe the mapping MPG or assignment ASG.

In addition to both aforementioned options executing the mapping MPG or an assignment ASG the formed functional unit FTU can be designed such that the mapping MPG or assignment ASG, - in the case that the physical object POBx is registered rgt further by at least one further IT-system, so in case (**i**) by the third IT-system ITSY3, in case (**ii**) by the second IT-system ITSY3 and in case (**iii**) by the first IT-system ITSY1, with regard to each the corresponding third, second or first IT-system-related data set, including the data set stored in the local persistence LPS - is executed exe complementally and matching algorithm-based, in which a matching algorithm MTAG of the program module PGM executed by the processor PRC of the computer-implemented-tool CIT in the control unit CTU is executed exe such that, when more than two IT-systems, e.g. the at least three IT-systems ITSY1, ITSY2, ITSY3, are involved, a twice mapping MPG or assignment ASG of the two, the first and the second or the first and the third or the second and the third, IT-systems ITSY1, ITSY2; ITSY1, ITSY3; ITSY2, ITSY3 already exists and at least one additional mapping or assigning-relation needs to be considered, the matching algorithm MTAG enables the processor PRC to execute exe the mapping MPG or assignment ASG by matching.

## Claims

1. Computer-implemented method for identifying a physical object (POBx) of physical objects (POB1,... POBx, ...POBn) within a distributed IT-system-structure (DITSYS⁺, DITSYS⁺⁺), in particular either realized as a multi-site-system-structure (MSSYS⁺, MSSYS⁺⁺) or one-site-system-structure (OSSYS⁺, OSSYS⁺⁺), including
- two IT-systems (ITSY1, ITSY2) communicating with each other, in which
concerning the physical objects (POB1,... POBx, ...POBn) IT-system related data sets (DS_{POB1,1}, ... DS_{POBx,1}, ... DS_{POBn,1}; DS_{POB1,2}, ... DS_{POBx,2}, ... DS_{POBn,2}) are available and wherein for identifying the physical object (POBx)
-- a first data set (DS_{POBx,1}) including at least one primary data set attribute (DSA1_{POBx,1}, DSA2_{POBx,1}, DSA3_{POBx,1}, DSA4_{POBx,1}) is managed, in particular created, used and/or provided, by a first IT-system (ITSY1),
-- a second data set (DS_{POBx,2}) including at least one secondary data set attribute (DSA1_{POBx,2}, DSA2_{POBx,2}, DSA3_{POBx,2}) is managed, in particular created, used and/or provided, by a second IT-system (ITSY2),
or
- at least three IT-systems (ITSY1, ITSY2, ITSY3) being able to communicate with each other, in which
concerning the physical objects (POB1,... POBx, ...POBn) and IT-system related data sets (DS_{POB1,1}, ... DS_{POBx,1}, ... DS_{POBn,1}; DS_{POB1,2}, ... DS_{POBx,2}, ... DS_{POBn,2}; DS_{POB1,3}, ... DS_{POBx,3}, ... DS_{POBn,3}) are available and wherein for identifying the physical object (POBx)
- a first data set (DS_{POBx,1}) including at least one primary data set attribute (DSA1_{POBx,1}, DSA2_{POBx,1}, DSA3_{POBx,1}) is managed, in particular created, used and/or provided, by a first IT-system (ITSY1),
- a second data set (DS_{POBx,2}) including at least one secondary data set attribute (DSA1_{POBx,2}, DSA2_{POBx,2}, DSA3_{POBx,2}) is managed, in particular created, used and/or provided, by a second IT-system (ITSY2),
- a third data set (DS_{POBx,3}) including at least one tertiary data set attribute (DSA1_{POBx,3}, DSA2_{POBx,3}, DSA3_{POBx,3}) is managed, in particular created, used and/or provided, by a third IT-system (ITSY3),
**characterized by**:
**a**) registering (rgt) at a registry-assign-system (RGASS) the physical object (POBx) with regard to
- the first data set (DS_{POBx,1}) according to a first primary data set attribute (DSA1_{POBx,1}) of the at least one primary data set attribute (DSA1_{POBx,1}, DSA2_{POBx,1}, DSA3_{POBx,1}, DSA4_{POBx,1}) by the first IT-system (ITSY1),
- the second data set (DS_{POBx,2}) according to a first secondary data set attribute (DSA1_{POBx,2}) of the at least one secondary data set attribute (DSA1_{POBx,2}, DSA2_{POBx,2}, DSA3_{POBx,2}) by the second IT-system (ITSY2),
- the third data set (DS_{POBx,3}) according to a first tertiary data set attribute (DSA1_{POBx,3}) of the at least one tertiary data set attribute (DSA1_{POBx,3}, DSA2_{POBx,3}, DSA3_{POBx,3}) by the third IT-system (ITSY3),
**b**) executing (exe) by the registry-assign-system (RGASS) a mapping (MPG) or assignment (ASG) with respect to an object-kind, such as physical, device, IoT-device or tagged item, and to the first primary, first secondary and third tertiary data set attributes (DSA1_{POBx,1}, DSA1_{POBx,2}, DSA1_{POBx,3}), such as internal ID's with values "0001", "4711" and "0815", of the first, second and third data sets (DS_{POBx,1}, DS_{POBx,2}, DS_{POBx,3}) such that, when each IT-system (ITSY1, ITSY2, ITSY3) to identify the physical object (POBx) is querying (qry) at the registry-assign-system (RGASS) with respect to its first primary, first secondary, or first tertiary data set attribute (DSA1_{POBx,1}, DSA1_{POBx,2}, DSA1_{POBx,3}) a data set attribute of interest of the data set attributes (DSA2_{POBx,1}, DSA3_{POBx,1}, DSA4_{POBx,1}, DSA2_{POBx,2}, DSA3_{POBx,2}, DSA2_{POBx,3}, DSA3_{POBx,3}), which is managed IT-system based, in particular created, used and/or provided, within the distributed IT-system-structure (DITSYS⁺, DITSYS⁺⁺) in the context of the first, second or third data sets (DS_{POBx,1}, DS_{POBx,2}, DS_{POBx,3}) and which on one side is different from the first primary, first secondary and first tertiary data set attributes (DSA1_{POBx,1}, DSA1_{POBx,2}, DSA1_{POBx,3}) and on the other is an alien or unknown to each querying IT-system (ITSY1, ITSY2, ITSY3), the queried data set attribute of interest of the physical object (POBx) is identified due to the mapping (MPG) or assignment (ASG) and is provided from a target IT-system of the IT-systems (ITSY1, ITSY2, ITSY3), at which the queried data set attribute is available and which due to the identification is notified (ntf) by the registry-assign-system (RGASS), to the querying IT-system.

2. Computer-implemented method according to claim 1, **characterized in that**
the mapping (MPG) or assignment (ASG) in the registry-assign-system (RGASS), in the case that the physical object (POBx) is registered (rgt) in pairs of systems by the first and second IT-systems (ITSY1, ITSY2) or the first and third IT-systems (ITSY1, ITSY3) or the second and third IT-systems (ITSY2, ITSY3) with regard to each the corresponding IT-systems (ITSY1, ITSY2; ITSY1, ITSY3; ITSY2, ITSY3)-related data sets including the data sets attributes at the registry-assign-system (RGASS), is executed (exe) manually.

3. Computer-implemented method according to claim 1, **characterized in that**
the mapping (MPG) or assignment (ASG) in the registry-assign-system (RGASS), in the case that the physical object (POBx) is registered (rgt) in pairs of systems by the first and second IT-systems (ITSY1, ITSY2) or the first and third IT-systems (ITSY1, ITSY3) or the second and third IT-systems (ITSY2, ITSY3) with regard to each the corresponding IT-systems (ITSY1, ITSY2; ITSY1, ITSY3; ITSY2, ITSY3)-related data sets including the data sets attributes at the registry-assign-system (RGASS), is executed (exe) algorithm-based, in which a software-algorithm (SWAG) being enhanced by business logic to calculate the mapping (MPG) or assignment (ASG) is executed (exe) such that due to the business logic it is enabled to read the data sets attributes of the IT-systems (ITSY1, ITSY2; ITSY1, ITSY3; ITSY2, ITSY3) and to compare them based on the business logic to execute (exe) the mapping (MPG) or assignment (ASG).

4. Computer-implemented method according to the claim 2 or 3, **characterized in that**
the mapping (MPG) or assignment (ASG) in the registry-assign-system (RGASS), in the case that the physical object (POBx) is registered (rgt) further by at least one further IT-system (ITSY3; ITSYS2; ITSYS1) with regard to each the corresponding IT-system (ITSY3; ITSYS2; ITSYS1)-related data set including the data set attributes at the registry-assign-system (RGASS), is executed (exe) complementally and matching algorithm-based, in which a matching algorithm (MTAG) is executed such that, when more than two IT-systems, the at least three IT-systems (ITSY1, ITSY2, ITSY3), are involved, a twice mapping (MPG) or assignment (ASG) of the two IT-systems (ITSY1, ITSY2; ITSY1, ITSY3; ITSY2, ITSY3) already exists and at least one additional mapping or assigning-relation needs to be considered, due to the matching algorithm (MTAG) the mapping (MPG) or assignment (ASG) is executed (exe) by matching.

5. Computer-implemented method according to one of the claims 1 to 4, **characterized in that**
the physical object (POB1,... POBx, ...POBn) is a device, an IoT-device or a tagged item.

6. Computer-implemented-tool (CIT), in particular a Computer-Program-Product, e.g. designed as an APP, for carrying out the computer-implemented method according to one of the claims 1 to 5, with
- a non-transitory, processor-readable storage medium (STM) having processor-readable program-instructions of a program module (PGM) for carrying out the computer-implemented method stored in the non-transitory, processor-readable storage medium (STM) and
- a processor (PRC) connected with the storage medium (STM) executing the processor-readable program-instructions of the program module (PGM) to carry out the computer-implemented method according to one of the claims 1 to 5.

7. Registry-assign-system (RGASS) for identifying a physical object (POBx) of physical objects (POB1,... POBx, ...POBn) within a distributed IT-system-structure (DITSYS⁺, DITSYS⁺⁺), in particular either realized as a multi-site-system-structure (MSSYS⁺, MSSYS⁺⁺) or one-site-system-structure (OSSYS⁺, OSSYS⁺⁺), including
- two IT-systems (ITSY1, ITSY2) communicating with each other, in which
concerning the physical objects (POB1,... POBx, ...POBn) IT-system related data sets (DS_{POB1,1}, ... DS_{POBx,1}, ... DS_{POBn,1}; DS_{POB1,2}, ... DS_{POBx,2}, ... DS_{POBn,2}) are available and wherein for identifying the physical object (POBx)
-- a first data set (DS_{POBx,1}) including at least one primary data set attribute (DSA1_{POBx,1}, DSA2_{POBx,1}, DSA3_{POBx,1}, DSA4_{POBx,1}) is managed, in particular created, used and/or provided, by a first IT-system (ITSY1),
-- a second data set (DS_{POBx,2}) including at least one secondary data set attribute (DSA1_{POBx,2}, DSA2_{POBx,2}, DSA3_{POBx,2}) is managed, in particular created, used and/or provided, by a second IT-system (ITSY2),
or
- at least three IT-systems (ITSY1, ITSY2, ITSY3) being able to communicate with each other, in which
concerning the physical objects (POB1,... POBx, ...POBn) and IT-system related data sets (DS_{POB1,1}, ... DS_{POBx,1}, ... DS_{POBn,1}; DS_{POB1,2}, ... DS_{POBx,2}, ... DS_{POBn,2}; DS_{POB1,3}, ... DS_{POBx,3}, ... DS_{POBn,3}) are available and wherein for identifying the physical object (POBx)
- a first data set (DS_{POBx,1}) including at least one primary data set attribute (DSA1_{POBx,1}, DSA2_{POBx,1}, DSA3_{POBx,1}) is managed, in particular created, used and/or provided, by a first IT-system (ITSY1),
-- a second data set (DS_{POBx,2}) including at least one secondary data set attribute (DSA1_{POBx,2}, DSA2_{POBx,2}, DSA3_{POBx,2}) is managed, in particular created, used and/or provided, by a second IT-system (ITSY2),
-- a third data set (DS_{POBx,3}) including at least one tertiary data set attribute (DSA1_{POBx,3}, DSA2_{POBx,3}, DSA3_{POBx,3}) is managed, in particular created, used and/or provided, by a third IT-system (ITSY3),
**characterized by**:
**a**) a control unit (CTU), which is connected to a user interface (USI), a local persistence (LPS) and an IT-system interface (ITSYI) via the registry-assign-system (RGASS) is connected with a registry adapter (RGA) and a resolve adapter (RSA) of the IT-systems (ITSY1, ITSY2; ITSY1, ITSY2, ITSY3) and in which a computer-implemented-tool (CIT) with
- a non-transitory, processor-readable storage medium (STM) having processor-readable program-instructions of a program module (PGM) for identifying the physical object (POBx) stored in the non-transitory, processor-readable storage medium (STM),
- a processor (PRC) connected with the storage medium (STM) executing the processor-readable program-instructions of the program module (PGM) to identify the physical object (POBx), is implemented or uploadable, wherein the Computer-implemented-tool (CIT) of the control unit (CTU), the user interface (USI), the local persistence (LPS) and the IT-system interface (ITSYI) form a functional unit (FTU) such that
**a1**) the physical object (POBx) is registered (rgt) at the registry-assign-system (RGASS) via the IT-system interface (ITSYI) with regard to
- the first data set (DS_{POBx,1}) according to a first primary data set attribute (DSA1_{POBx,1}) of the at least one primary data set attribute (DSA1_{POBx,1}, DSA2_{POBx,1}, DSA3_{POBx,1}, DSA4_{POBx,1}) by the first IT-system (ITSY1),
- the second data set (DS_{POBx,2}) according to a first secondary data set attribute (DSA1_{POBx,2}) of the at least one secondary data set attribute (DSA1_{POBx,2}, DSA2_{POBx,2}, DSA3_{POBx,2}) by the second IT-system (ITSY2),
- the third data set (DS_{POBx,3}) according to a first tertiary data set attribute (DSA1_{POBx,3}) of the at least one tertiary data set attribute (DSA1_{POBx,3}, DSA2_{POBx,3}, DSA3_{POBx,3}) by the third IT-system (ITSY3), where all the registering-related information are stored in the local persistence (LPS),
**a2**) a mapping (MPG) or assignment (ASG) is executed (exe) by the computer-implemented-tool (CIT) of the control unit (CTU) with respect to an object-kind, such as physical, device, IoT-device or tagged item, and to the first primary, first secondary and third tertiary data set attributes (DSA1_{POBx,1}, DSA1_{POBx,2}, DSA1_{POBx,3}) , such as internal ID's with values "0001", "4711" and "0815", of the first, second and third data sets (DS_{POBx,1}, DS_{POBx,2}, DS_{POBx,3}) such that, when each IT-system (ITSY1, ITSY2, ITSY3) to identify the physical object (POBx) is querying (qry) via the IT-system interface (ITSYI) according to its first primary, first secondary, or first tertiary data set attribute (DSA1_{POBx,1}, DSA1_{POBx,2}, DSA1_{POBx,3}) a data set attribute of interest of the data set attributes (DSA2_{POBx,1}, DSA3_{POBx,1}, DSA4_{POBx,1}, DSA2_{POBx,2}, DSA3_{POBx,2}, DSA2_{POBx,3}, DSA3_{POBx,3}), which is managed IT-system based, in particular created, used and/or provided, within the distributed IT-system-structure (DITSYS⁺, DITSYS⁺⁺) in the context of the first, second or third data sets (DS_{POBx,1}, DS_{POBx,2}, DS_{POBx,3}) and which on one side is different from the first primary, first secondary and first tertiary data set attributes (DSA1_{POBx,1}, DSA1_{POBx,2}, DSA1_{POBx,3}) and on the other is an alien or unknown to each querying IT-system (ITSY1, ITSY2, ITSY3), the queried data set attribute of interest of the physical object (POBx) is identified due to the mapping (MPG) or assignment (ASG) and is provided from a target IT-system of the IT-systems (ITSY1, ITSY2, ITSY3), at which the queried data set attribute is available and which due to the identification is notified (ntf) via the IT-system interface (ITSYI) by the control unit (CTU), to the querying IT-system.

8. Registry-assign-system (RGASS) according to claim 7, **characterized in that**
the formed functional unit (FTU) is designed such that the mapping (MPG) or assignment (ASG), in the case that the physical object (POBx) is registered (rgt) in pairs of systems by the first and second IT-systems (ITSY1, ITSY2) or the first and third IT-systems (ITSY1, ITSY3) or the second and third IT-systems (ITSY2, ITSY3) with regard to each the corresponding IT-systems (ITSY1, ITSY2; ITSY1, ITSY3; ITSY2, ITSY3)-related data sets including the data sets attributes stored in the local persistence (LPS), is executed (exe) manually by inputting corresponding user-triggered mapping or assigning commands via the user interface (USI) and the control unit (CTU) into the processor (PRC) of the Computer-implemented-tool (CIT).

9. Registry-assign-system (RGASS) according to claim 7, **characterized in that**
the formed functional unit (FTU) is designed such that the mapping (MPG) or assignment (ASG), in the case that the physical object (POBx) is registered (rgt) in pairs of systems by the first and second IT-systems (ITSY1, ITSY2) or the first and third IT-systems (ITSY1, ITSY3) or the second and third IT-systems (ITSY2, ITSY3) with regard to each the corresponding IT-systems (ITSY1, ITSY2; ITSY1, ITSY3; ITSY2, ITSY3)-related data sets including the data sets attributes stored in the local persistence (LPS), is executed (exe) algorithm-based, in which a software algorithm (SWAG) of the program module (PGM) executed by the processor (PRC) of the computer-implemented-tool (CIT) in the control unit (CTU) and being enhanced by business logic to calculate the mapping (MPG) or assignment (ASG) is executed (exe) such that the business logic enables the processor (PRC) to read the stored data sets attributes of the IT-systems (ITSY1, ITSY2; ITSY1, ITSY3; ITSY2, ITSY3) and to compare them based on the business logic to execute (exe) the mapping (MPG) or assignment (ASG) .

10. Registry-assign-system (RGASS) according to the claim 8 or 9, **characterized in that**
the formed functional unit (FTU) is designed such that the mapping (MPG) or assignment (ASG), in the case that the physical object (POBx) is registered (rgt) further by at least one further IT-system (ITSY3; ITSYS2; ITSYS1) with regard to each the corresponding IT-system (ITSY3; ITSYS2; ITSYS1)-related data set including the data set stored in the local persistence (LPS), is executed (exe) complementally and matching algorithm-based, in which a matching algorithm (MTAG) of the program module (PGM) executed by the processor (PRC) of the computer-implemented-tool (CIT) in the control unit (CTU) is executed (exe) such that, when more than two IT-systems, the at least three IT-systems (ITSY1, ITSY2, ITSY3), are involved, a twice mapping (MPG) or assignment (ASG) of the two IT-systems (ITSY1, ITSY2; ITSY1, ITSY3; ITSY2, ITSY3) already exists and at least one additional mapping or assigning-relation needs to be considered, that matching algorithm (MTAG) enables the processor (PRC) to execute (exe) the mapping (MPG) or assignment (ASG) by matching.

11. Registry-assign-system (RGASS) according to one of the claims 7 to 10, **characterized in that**
the physical object (POB1,... POBx, ...POBn) is a device, an IoT-device or a tagged item.
